(19) Europäisches Patentamt / European Patent Office / Office européen des brevets

(11) **EP 2 862 407 B1**

(12) **FASCICULE DE BREVET EUROPEEN**

(45) Date de publication et mention de la délivrance du brevet:
**14.11.2018 Bulletin 2018/46**

(21) Numéro de dépôt: **13737308.0**

(22) Date de dépôt: **11.06.2013**

(51) Int Cl.:
*H04W 74/08* *(2009.01)*   *H04L 5/00* *(2006.01)*
*H04W 4/08* *(2009.01)*   *H04W 72/04* *(2009.01)*
*H04W 72/08* *(2009.01)*   *H04W 76/45* *(2018.01)*

(86) Numéro de dépôt international:
**PCT/FR2013/000149**

(87) Numéro de publication internationale:
**WO 2013/186448 (19.12.2013 Gazette 2013/51)**

(54) **PROCÉDÉ D'ÉTABLISSEMENT D'UNE TRANSMISSION ENTRE DES TERMINAUX MOBILES D'UN MÊME GROUPE APPARTENANT À UN RÉSEAU DE RADIOCOMMUNICATION À RESSOURCES PARTAGÉES OPÉRANT EN MODE DIRECT**

VERFAHREN ZUR HERSTELLUNG EINER ÜBERTRAGUNG ZWISCHEN MOBILEN ENDGERÄTEN DERSELBEN GRUPPE FÜR EIN IN EINEM DIREKTMODUS BETRIEBENES FUNKKOMMUNIKATIONSNETZ MIT GEMEINSAM GENUTZTEN RESSOURCEN

METHOD FOR ESTABLISHING A TRANSMISSION BETWEEN MOBILE TERMINALS OF THE SAME GROUP PERTAINING TO A SHARED-RESOURCE RADIOCOMMUNICATION NETWORK OPERATING IN A DIRECT MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2012 FR 1201723**

(43) Date de publication de la demande:
**22.04.2015 Bulletin 2015/17**

(73) Titulaire: **Airbus DS SAS**
**78990 Elancourt (FR)**

(72) Inventeurs:
• **GRUET, Christophe**
**78180 Montigny le Bretonneux (FR)**
• **PISON, Laurent**
**78760 Jouars Ponchartrain (FR)**
• **GEORGEAUX, Eric**
**78180 Montigny Le Bretonneux (FR)**

(74) Mandataire: **Cabinet Camus Lebkiri**
**25 rue de Maubeuge**
**75009 Paris (FR)**

(56) Documents cités:
**US-A1- 2009 016 317   US-A1- 2009 019 173**
**US-A1- 2011 105 065**

**EP 2 862 407 B1**

**Description**

Domaine technique et état de la technique

La présente invention concerne l'établissement d'une transmission d'informations entre un terminal mobile émetteur et des terminaux mobiles récepteur d'un même groupe de terminaux appartenant à un réseau de radiocommunication à ressources partagées, ce dernier opérant en mode direct et comprenant une pluralité de terminaux mobiles organisés en groupe.

Il est connu d'utiliser, pour des services de mission critique de sécurité publique, un réseau de radiocommunication terrestre privé professionnel à bande étroite et ressources partagées PMR (« Professional Mobile Radio » en anglais) par exemple du type DMR (« Digital Mobile Radio » en anglais) ou TETRA (« Terrestrial Trunked Radio » en anglais).

Il est également connu de réunir les terminaux fixes et mobiles par groupes dans le réseau privé professionnel PMR afin que tout terminal membre d'un groupe puisse transmettre des données de voix, ou parfois de brefs messages à des débits plus élevés, aux autres terminaux membres du groupe à travers l'infrastructure du réseau et recevoir les données de n'importe quel autre terminal appartenant au groupe. Les terminaux fixes et mobiles d'un même groupe ne peuvent communiquer qu'entre eux. Le partage des ressources radio (« trunking » en anglais) dans une station de base du réseau privé professionnel est réalisé sous forme de canaux dont le nombre et les débits sont déterminés pour satisfaire, en toute sécurité, aux besoins en ressources de communication et en couverture radio des terminaux mobiles.

En outre, dans un mode opératoire particulier asynchrone, désigné mode direct ou DMO (« Direct Mode of Opération » en anglais), les terminaux mobiles d'un même groupe communiquent directement entre eux sans passer par une station de base du réseau de radiocommunication à ressources partagées. Ainsi, dans le mode DMO de portée néanmoins limitée à quelques centaines de mètres, aucune station de base ou répéteur n'est mis en oeuvre. Ce mode permet de communiquer dans des zones hors de la couverture radio (par exemple un parking souterrain).

Dans ces réseaux de radiocommunication à ressources partagées opérant en mode DMO, chaque canal de fréquences - alloué à un groupe de terminaux - est indépendant, au moins du point de vue de la synchronisation, des autres canaux. Ainsi, il n'existe de synchronisation qu'entre les terminaux d'un même canal. Les fréquences d'utilisation de chaque canal sont déterminées par avance. Seuls les temps de début des trames et l'ordonnancement des trames sont synchrones et gérés au niveau de chaque groupe.

Lorsqu'un tel canal est attribué, tout terminal d'un groupe peut utiliser la ressource à tout moment, ce qui implique de mettre en oeuvre un protocole de surveillance et de détection de collisions. Dans le cas d'une collision, le message est répété sur le canal à l'issu d'un temps aléatoire. La surveillance des collisions nécessite un arbitrage.

Ainsi, lorsque des canaux de fréquences existent et sont spécifiquement dédiés au mode opératoire DMO dans un réseau de radiocommunication à bande étroite et à ressources partagées opérant en mode DMO, ce dernier mode nécessite une gestion, une surveillance et une détection de collision et donc un débit utile plus faible.

Le document US 2009/016317 A1 (WU XINZHOU ET AL) traite de communications de groupe entre des terminaux communiquant en mode pair à pair, "peer to peer". Un terminal d'un groupe donné désirant transmettre des données envoie une requête de transmission en utilisant une ressource associée audit terminal ou à une connexion pair à pair dans laquelle il est impliqué. Les autres terminaux du groupe écoutent une telle requête de transmission, et y répondent positivement ou non en fonction d'autres requêtes reçues par ailleurs et leurs priorités respectives.

L'invention

La présente invention a pour objet de remédier à ces inconvénients et, notamment, de permettre l'établissement d'une transmission d'informations entre un terminal mobile émetteur et au moins un terminal mobile récepteur d'un réseau de radiocommunication à ressources partagées fonctionnant en mode direct sans risque de collision.

A cette fin, selon l'invention, le procédé pour établir une transmission d'informations entre un terminal mobile émetteur et au moins un terminal mobile récepteur d'un même groupe de terminaux appartenant à un réseau de radiocommunication à ressources partagées, ce dernier opérant en mode direct et comprenant une pluralité de terminaux mobiles organisés en groupe, est remarquable par le fait que :

E1/au moins un terminal d'un groupe donné de terminaux dudit réseau, dit premier terminal émetteur, émet une requête de transmission pour informer les autres terminaux dudit groupe de son intention de leur transmettre des informations en utilisant des ressources allouées à son groupe, voire des ressources allouées aux autres groupes ;

E2/ au moins certains des autres terminaux dudit groupe surveillent l'émission d'une telle requête de transmission ;

E3/ chaque terminal dudit groupe qui a reçu ladite requête de transmission, dit terminal récepteur, détermine, à partir d'au moins une stratégie de sélection prédéfinie, s'il accepte la transmission d'informations par ledit premier terminal émetteur ;

E4/ en cas d'acceptation de ladite transmission, chaque terminal récepteur transmet aux autres terminaux de son groupe un signal de retour comprenant des données relatives audit premier terminal émetteur, notamment son identité ;

E5/ après réception dudit signal de retour, ledit premier terminal émetteur vérifie s'il respecte des conditions de transmission prédéterminées ; et

E6/ dans le cas où lesdites conditions de transmission sont respectées, ledit premier terminal émetteur transmet lesdites informations aux autres terminaux de son groupe sur au moins une ressource allouée audit groupe.

Ainsi, grâce à l'invention, la gestion des communications entre les terminaux d'un même groupe d'un réseau de radiocommunication à ressources partagées opérant en mode direct est améliorée. Pour qu'une transmission soit établie entre un terminal émetteur et des terminaux récepteur d'un même groupe, des conditions de transmission sont à respecter, de manière à réduire le risque de collisions et optimiser la qualité et le débit des transmissions d'informations entre ces terminaux.

De plus, dans une étape préalable à l'étape E6, ledit premier terminal émetteur peut recevoir des notifications de terminaux n'appartenant pas audit groupe considéré, à partir desquelles il peut déterminer la disponibilité des ressources allouées aux groupes autres que ledit groupe.

En outre, selon ladite stratégie de sélection prédéfinie mise en oeuvre lors de l'étape E3, chaque terminal récepteur dudit groupe peut :

- déterminer le rapport signal sur bruit attendu pour une transmission depuis ledit premier terminal émetteur ;
- comparer le rapport signal sur bruit ainsi déterminé à un premier rapport seuil ; et
- accepter la transmission d'informations que souhaite transmettre ledit premier terminal émetteur, lorsque le rapport signal sur bruit déterminé est au moins égal audit premier rapport seuil.

Ainsi, une transmission d'informations d'un terminal émetteur ne peut être envisagée que si la qualité de la transmission est suffisante.

De plus, lorsqu'au moins un autre terminal émetteur dudit groupe, dit second terminal émetteur, souhaite également transmettre simultanément des informations aux autres terminaux dudit groupe, chaque terminal récepteur peut, selon ladite stratégie de sélection prédéfinie mise en oeuvre lors de l'étape E3:

- déterminer le rapport signal sur bruit attendu pour une transmission depuis le second terminal émetteur ;
- comparer le rapport signal sur bruit ainsi déterminé audit premier rapport seuil ;
- vérifier qu'au moins un critère de sélection supplémentaire est validé ; et

- accepter la transmission d'informations depuis le premier terminal émetteur lorsque le rapport signal sur bruit attendu correspondant est au moins égal audit premier rapport seuil et que ledit critère de sélection supplémentaire est validé.

A titre d'exemples, ledit critère de sélection supplémentaire peut appartenir au groupe de critères suivant :

- dans le cas où une stratégie de priorité des terminaux est mise en oeuvre dans ledit groupe, la priorité du premier terminal émetteur présente une priorité plus élevée que celle associée au second terminal émetteur, voire aux autres terminaux émetteur dudit groupe qui souhaitent transmettre ;
- le rapport signal sur bruit déterminé correspondant au premier terminal émetteur est supérieur à celui correspondant au second terminal émetteur, voire aux autres terminaux émetteur dudit groupe qui souhaitent transmettre.

De préférence, préalablement à l'étape E4, chaque terminal récepteur dudit groupe ayant accepté la transmission depuis le premier terminal émetteur :

- détermine le rapport signal sur interférence attendu pour une transmission depuis le premier terminal émetteur dont la transmission d'informations est acceptée ;
- compare le rapport signal sur interférence ainsi déterminé à un second rapport seuil, de préférence égal audit premier rapport seuil ; et
- indique dans son signal de retour :

  ▪ lorsque le rapport signal sur interférence déterminé est au moins égal audit second rapport seuil, qu'il autorise la transmission d'informations simultanément sur la ressource allouée audit groupe par un terminal émetteur dudit groupe autre que ledit premier terminal émetteur ;
  ▪ lorsque le rapport signal sur interférence déterminé est inférieur audit second rapport seuil, qu'il refuse la transmission d'informations simultanément sur la ressource allouée audit groupe par un terminal émetteur dudit groupe autre que ledit premier terminal émetteur.

Ainsi, lorsqu'une transmission parallèle d'un autre terminal émetteur risque de gêner la réception d'un terminal récepteur qui a accepté la réception depuis le premier terminal émetteur, le terminal récepteur considéré demande l'annulation de la transmission parallèle.

En outre, lors de l'étape de vérification E5, ledit premier terminal émetteur peut :

- calculer un rapport R1 défini par la relation suivante :

$$R1 = \frac{N_{OK}}{N_{OK} + N_{KO}}$$

dans laquelle :

- $N_{OK}$ désigne le nombre de terminaux récepteur dudit groupe ayant accepté la transmission d'informations du premier terminal émetteur ;

- $N_{KO}$ désigne le nombre de terminaux récepteur ayant refusé la transmission d'informations du premier terminal émetteur et ayant accepté la transmission d'informations d'un autre terminal émetteur dudit groupe ;

- calculer un rapport R2 défini par la relation suivante :

$$R2 = \frac{N_{OK} + N_{KO}}{N_{Total}^{DMOGroup\#k}}$$

dans laquelle $N_{Total}^{DMOGroup\#k}$ désigne le nombre total de terminaux dudit groupe ;

- comparer les rapports R1 et R2 respectivement à un premier seuil et un second seuil ; et
- décider que lesdites conditions de transmission sont respectées lorsque les rapports R1 et R2 sont respectivement supérieurs aux premier et second seuils.

De préférence, une stratégie de priorité des terminaux étant définie dans ledit groupe, ledit premier terminal émetteur :

- vérifie si, parmi les terminaux récepteur ayant refusé de recevoir des informations de sa part, au moins l'un d'entre eux présente une priorité supérieure à celle des terminaux récepteur ayant accepté la transmission depuis ledit premier terminal émetteur ; et
- décide que lesdites conditions de transmission sont respectées, lorsque les terminaux récepteur ayant refusé de recevoir des informations de sa part ne possèdent pas de priorité supérieure à celle des terminaux récepteur ayant accepté la transmission.

Par ailleurs, la requête de transmission comprend de préférence l'identité du premier terminal émetteur, son intention de démarrer une transmission d'informations et les ressources allouées aux autres groupes dudit réseau sur lesquelles le premier terminal émetteur souhaite transmettre des informations. Bien évidemment, la requête de transmission peut comporter des informations supplémentaires telles que la durée de la transmission souhaitée.

De préférence encore, selon l'invention :

- le premier terminal émetteur reçoit des données sur la disponibilité des ressources allouées par défaut aux autres groupes qu'il souhaite utiliser lors de sa transmission d'informations ; et

- lors de l'étape E6/, le premier terminal émetteur transmet les informations sur la ressource allouée par défaut à son groupe et sur les ressources souhaitées des autres groupes qui sont disponibles.

Ainsi, l'allocation de ressources supplémentaires, appartenant à d'autres groupes que celui du premier terminal émetteur permet d'améliorer le débit de données, tout en prévenant une perturbation des communications des groupes dont les ressources sont utilisées ou requises.

De façon avantageuse, lorsque lesdites conditions de transmission sont respectées, ledit premier terminal émetteur, qui a décidé de transmettre des informations aux autres terminaux de son groupe, peut mettre en oeuvre une stratégie d'optimisation correspondant à une adaptation de puissance et/ou à une adaptation du schéma de modulation et de codage.

Par ailleurs, la présente invention concerne également un terminal mobile appartenant à un réseau de radiocommunication à ressources partagées, ce dernier opérant en mode direct et comprenant une pluralité de terminaux mobiles organisés en groupe.

Selon l'invention, ledit terminal mobile comprend :

- des moyens pour émettre une requête de transmission afin d'informer les autres terminaux de son groupe de son intention de leur transmettre des informations ;
- des moyens pour surveiller l'émission d'une requête de transmission en provenance de terminaux émetteur de son groupe ;
- des moyens pour déterminer, à partir d'au moins une stratégie de sélection prédéfinie, s'il accepte la transmission d'informations depuis un terminal émetteur de son groupe dont il a reçu une requête de transmission ;
- des moyens pour transmettre un signal de retour aux autres terminaux de son groupe comprenant des données relatives à un terminal émetteur dont il a accepté une transmission d'informations ;
- des moyens pour vérifier, en cas de réception d'un signal de retour d'au moins un terminal récepteur de son groupe, s'il respecte des conditions de transmission prédéterminées ; et
- des moyens pour transmettre des informations aux autres terminaux de son groupe sur au moins une ressource allouée audit groupe, dans le cas où lesdites conditions de transmission sont respectées.

En outre, ledit terminal mobile de l'invention peut également comprendre :

- des moyens pour surveiller l'émission d'une requête de transmission en provenance de terminaux émetteur n'appartenant pas à son groupe ;

- des moyens pour surveiller des notifications concernant l'utilisation des ressources allouées à des groupes autres que le sien en provenance de terminaux récepteur n'appartenant pas à son groupe ;
- des moyens pour déterminer, à partir d'au moins une stratégie de sélection auxiliaire prédéfinie, si les ressources allouées à un autre groupe que le sien peuvent être utilisées pour transmettre des informations aux autres terminaux de son groupe ; et
- des moyens pour transmettre un signal de retour aux terminaux émetteur n'appartenant pas à son groupe et ayant indiqué leur intention d'utiliser les ressources de son groupe, pour leur indiquer l'indisponibilité de ces dernières.

La présente invention concerne encore un réseau de radiocommunication à ressources partagées opérant en mode direct et comprenant une pluralité de terminaux mobiles organisés en groupe, dans lequel lesdits terminaux mobiles sont aptes à mettre en oeuvre le procédé décrit précédemment.

Les figures

Les figures du dessin annexé feront bien comprendre comment l'invention peut être réalisée. Sur ces figures, des références identiques désignent des éléments semblables.

La figure 1 illustre, de façon schématique, un exemple de réseau de radiocommunication à ressources partagées opérant en mode direct, conforme à la présente invention.

La figure 2 est un diagramme en temps et en fréquences d'une trame conforme au procédé DMO de l'invention.

La figure 3 décrit un exemple de structure, en temps et en fréquences, de la trame de la figure 2.

La figure 4 est un diagramme en temps et en fréquences représentant un exemple de bloc de transmission mis en oeuvre dans le procédé DMO de l'invention.

La figure 5 illustre les différentes étapes mises en oeuvre pour établir une transmission conforme au procédé de l'invention entre un terminal émetteur et des terminaux récepteur d'un groupe donné du réseau de la figure 1.

La figure 6 représente, de façon schématique, un terminal mobile du réseau de la figure 1.

Description détaillée d'un exemple de réalisation illustrant l'invention

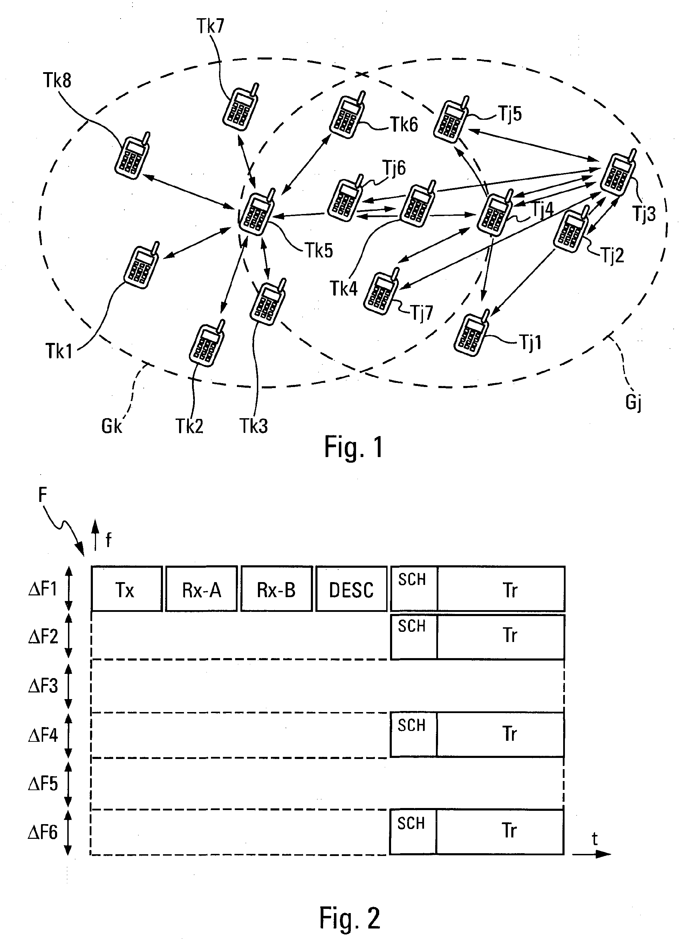

Sur la figure 1, on a représenté un réseau 1 de radiocommunication à ressources partagées opérant en mode direct (par exemple à bande étroite) qui comprend une pluralité de terminaux mobiles identiques Tki répartis en plusieurs groupes Gk (k et i étant des entiers représentant respectivement le numéro du groupe et le numéro du terminal considéré de ce groupe). Ainsi, dans le mode DMO, chaque terminal mobile Tki d'un groupe Gk peut transmettre des données aux autres terminaux de son groupe par la mise en oeuvre du procédé de transmission en mode DMO conforme à l'invention, décrit par la suite.

Dans l'exemple illustré par la figure 1, le réseau 1 comprend six groupes Gk distincts formés chacun de vingt-quatre terminaux mobiles (correspondant à vingt-quatre utilisateurs différents). Bien entendu, en variante, le nombre de groupes et le nombre de terminaux par groupe peuvent être différents.

Pour des raisons de clarté, seuls deux groupes Gk et Gj (j≠k) et quelques terminaux Tk1 à Tk8 et Tj1 à Tj7 appartenant à ces deux groupes sont représentés sur la figure 1.

Par la suite, chaque terminal mobile Tki, Tji peut fonctionner alternativement en émission ou en réception.

Selon le procédé DMO de l'invention, un unique canal de fréquences ΔFk est attribué par défaut à chaque groupe Gk, Gj du réseau 1.

En outre, comme illustré sur la figure 2, chaque trame radio F, conforme au procédé DMO de l'invention et mise en oeuvre dans le réseau 1, comprend :

- un bloc de transmission Tx, dont la structure permet à un ou plusieurs terminaux Tki d'un groupe donné Gk - qui souhaitent émettre - d'annoncer leur intention de transmission. De tels terminaux sont désignés par la suite terminaux émetteur ;
- un premier bloc de réception Rx-A, dont la structure permet aux terminaux Tki du groupe considéré Gk - qui n'ont pas l'intention de transmettre des données (appelés terminaux récepteur) - de retourner, notamment aux terminaux émetteur Tki dudit groupe Gk, leur perception de la future transmission demandée par ces derniers ;
- un second bloc de réception Rx-B, dont la structure permet aux terminaux récepteur Tji des autres groupes Gj d'indiquer, et notamment aux terminaux émetteur Tki du groupe Gk considéré, leur perception de la future transmission demandée par ces derniers ; et
- un bloc de description DESC, dont la structure associée permet de décrire la future transmission et, en particulier, le ou les canaux de fréquences utilisés, le schéma de modulation et de codage MCS (« Modulation and Coding Scheme » en anglais) mis en oeuvre et la longueur d'un bloc de trafic Tr associé. La modulation utilisée par défaut (par exemple QPSK1/3) est déterminée de telle manière à permettre une gestion des groupes de terminaux sur une zone géographique étendue. Toutefois, et comme décrit ultérieurement, le schéma MCS peut, sous certaines conditions, être modifié par le terminal émetteur ;

- un bloc de synchronisation SCH comprenant un mot de synchronisation associé ; et
- le bloc de trafic Tr comprenant les informations à transmettre aux autres terminaux Tki du groupe Gk considéré.

En particulier, chaque trame F comporte deux parties distinctes, à savoir :

- une première partie dédiée à la négociation d'une transmission, qui est formée des blocs Tx, Rx-A, Rx-B et DESC ; et
- une seconde partie dédiée à la transmission d'informations, qui est formée des blocs SCH et Tr.

Sur la figure 2, pour une même trame F, d'autres blocs SCH et Tr sont représentés et symbolisent l'utilisation temporaire des canaux de fréquences ΔFj attribués aux autres groupes Gj, mais utilisés par le groupe Gk considéré. Le détail d'une telle utilisation est décrit par la suite.

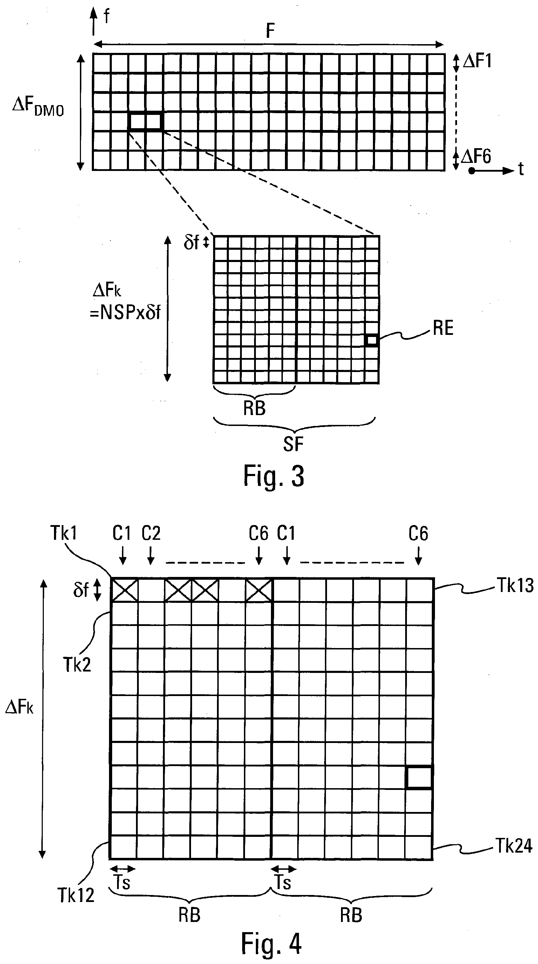

Par ailleurs, comme le montre plus précisément la figure 3, chaque canal de fréquences ΔFk, ΔFj est découpé en un nombre prédéfini NSP de sous-porteuses de largeur δf.

En particulier, dans un exemple de réalisation, chaque trame radio F, conforme au procédé DMO de l'invention, comprend dix sous-trames SF comprenant chacune deux blocs de ressources RB répartis consécutivement dans le temps.

Chaque bloc de ressources RB comprend $NS_{RB}$ x NSP éléments de ressources radio RE répartis sur $NS_{RB}$ périodes de symbole consécutives Ts et NSP sous-porteuses.

Avec NSP = 12 et δf = 15 kHz, la bande de fréquences totale allouée au réseau 1 est égale à 6.ΔFk, soit 1,080 MHz. La période de symbole Ts étant égale à 83,3 μs, la durée d'une trame radio F est donc de 10 ms.

Chacun des blocs Tx, Rx-A, Rx-B, DESC, SCH et Tr d'une trame F est formé d'une ou plusieurs sous-trames SF et présente en conséquence une durée multiple de la durée d'une sous-trame SF (1 ms).

Le traitement des blocs de transmission Tx et de réception Rx-A et Rx-B d'une trame F est effectué élément de ressource RE par élément de ressource RE, selon le principe d'une détection ON/OFF. En revanche, pour le traitement des blocs de données SCH et Tr, on met en oeuvre, à titre d'exemple, la norme de transmission LTE-OFDM. Ainsi, lors de la transmission des informations, le terminal émetteur Tki joue le rôle d'une station de base d'un réseau LTE et utilise une signalisation et une transmission basées, par exemple, sur un canal de contrôle physique de lien descendant PDCCH (« Physical Downlink Control Channel » en anglais).

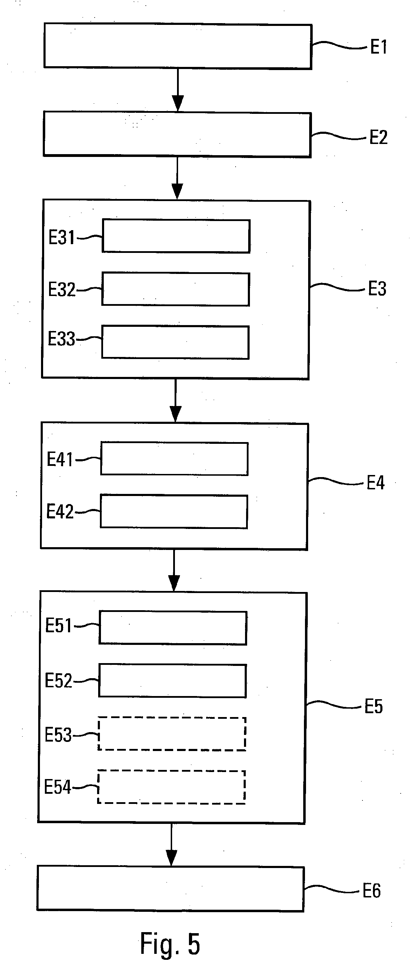

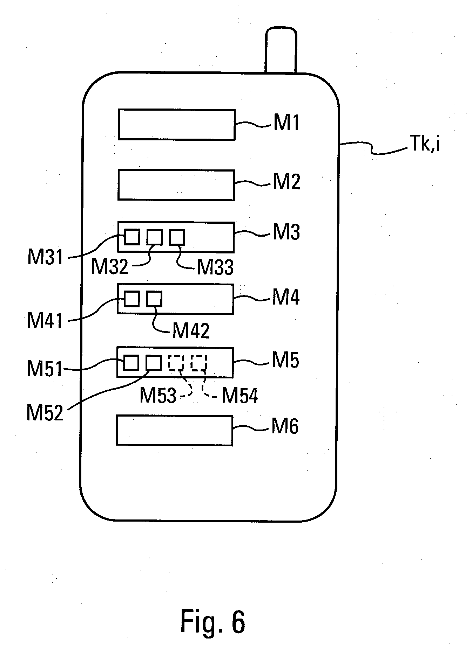

Comme le montre la figure 5, le procédé pour établir une transmission d'informations au sein d'un groupe Gk comprend, selon l'invention, une première étape E1 dans laquelle un ou plusieurs terminaux émetteur Tki du groupe Gk considéré émettent, par l'intermédiaire de moyens M1 (figure 6), une requête de transmission pour informer les autres terminaux Tki du groupe Gk de leur intention de transmettre des informations.

Les intentions de transmission des terminaux émetteur Tki du groupe Gk, qui se présentent sous la forme de mots d'intention de transmission, sont rassemblées dans le bloc de transmission Tx associé au groupe Gk, auquel est attribué par défaut le canal de fréquences ΔFk. La requête de transmission émise par un terminal émetteur Tki du groupe Gk comprend notamment son mot d'intention de transmission.

Comme le montre l'exemple de la figure 4, la structure du bloc de transmission Tx associé au groupe Gk sur le canal ΔFk comprend deux blocs de ressources RB consécutifs dans le temps. A chaque terminal Tki (représentant un utilisateur du groupe Gk) est associée une sous-structure formée de six éléments de ressources RE consécutifs, appartenant à un même bloc de ressources RB. Autrement dit, on alloue à chaque terminal Tki du groupe Gk six éléments de ressources RE consécutifs.

Etant donné que le bloc de transmission Tx comporte deux blocs de ressources RB consécutifs, comprenant chacun $NS_{RB}$ x NSP éléments de ressources radio RE répartis sur six périodes de symbole consécutives Ts et douze sous-porteuses δf, chaque bloc de ressources RB représente douze terminaux Tki différents (une même sous-porteuse δf du canal ΔFk étant allouée consécutivement à un terminal du groupe Gk pendant les six périodes Ts du premier bloc de ressources RB et à un autre terminal dudit groupe Gk pendant les six périodes Ts suivantes du second bloc de ressources RB).

Les éléments de ressources RE d'un bloc de ressources RB associés à une même période de symbole Ts représentent chacun l'intention de transmettre d'un terminal Tki du groupe Gk sur un canal de fréquences ΔFk, ΔFj donné. En particulier, la première colonne C1 - formée de douze éléments de ressources RE du bloc de transmission Tx - est associée au premier canal ΔF1 attribué par défaut au groupe G1, la deuxième colonne C2 est associée au deuxième canal ΔF2 attribué par défaut au groupe G2, etc.

Ainsi, les vingt-quatre terminaux Tki du groupe Gk considéré peuvent formuler leur intention de transmission sur le réseau 1, ainsi que le ou les canaux ΔFj supplémentaires qu'ils souhaitent utiliser pour leur transmission, en émettant un symbole dans l'élément de ressources RE approprié de la colonne correspondante. Les six éléments de ressources RE alloués à chacun des terminaux Tki du groupe Gk définissent le mot d'intention de transmission de ce terminal sur six bits.

L'ensemble des mots d'intention de transmission des terminaux Tki d'un même groupe forme le bloc de transmission Tx associé à ce groupe.

On comprendra que le canal de fréquences attribué par défaut à un groupe est utilisé de préférence en priorité.

Dans le cas où le volume de données à transmettre requiert plus de bande passante, un terminal émetteur Tki du groupe Gk peut utiliser des canaux supplémentaires ΔFj alloués aux autres groupes Gj, à condition qu'aucune activité ne soit détectée sur ces derniers.

Comme indiqué précédemment, le traitement de chaque bloc de transmission Tx est réalisé selon le principe d'une détection ON/OFF déterminant la présence d'un symbole dans un élément de ressources donné RE.

En variante, d'autres structures du bloc de transmission Tx sont bien entendu envisageables, notamment pour améliorer le rapport SNR, mais elles requièrent davantage de blocs de ressources RB et/ou la mise en oeuvre de protection supplémentaire (par exemple l'utilisation de code de convolution).

A titre d'exemple, la structure du bloc de transmission Tx peut reprendre en partie la structure d'un signal transmis dans un réseau de radiocommunication à large bande LTE. En particulier, le bloc de transmission Tx peut mettre en oeuvre :

- des canaux de synchronisation primaire PSS (« Primary Synchronization Signal » en anglais) et secondaire SSS (« Secondary Synchronization Signal » en anglais). Par exemple, l'identité unique de chaque terminal d'un groupe du réseau 1, équivalente à l'identité d'une cellule physique dans une trame descendante LTE, peut être transmise par les canaux de synchronisation primaire PSS et secondaire SSS. Ainsi, lorsque les identités des terminaux des différents groupes du réseau 1 sont connues de chaque terminal, celui-ci peut identifier le terminal émetteur et le groupe associé par la réception des canaux PSS et SSS ; et
- un canal de diffusion physique PBCH (« Physical Broadcast Channel » en anglais) qui peut être utilisé pour transmettre le mot d'intention de transmission d'un terminal émetteur.

Dans une deuxième étape E2 du procédé DMO de l'invention, les terminaux récepteur Tki du groupe Gk - qui ne désirent pas émettre - surveillent, par l'intermédiaire de leurs moyens M2 respectifs, l'émission de requêtes de transmission par les terminaux émetteur du groupe.

De cette façon, chacun des terminaux récepteur Tki du groupe Gk considéré connaît les intentions de transmission des terminaux émetteur de son propre groupe.

On peut noter que les terminaux récepteur Tki du groupe Gk peuvent également surveiller l'émission de requête de transmission en provenance de terminaux émetteur Tji appartenant à d'autres groupes Gj du réseau 1. Ainsi, en fonction de leur position géographique, certains des terminaux récepteur Tki du groupe Gk sont aptes à détecter :

- des conflits de transmission dans leur propre groupe Gk (par exemple deux terminaux émetteur Tki souhaitent émettre simultanément sur le même canal ΔFk) ;
- des conflits entre groupes (par exemple lorsqu'un terminal émetteur Tki du groupe Gk demande l'utilisation d'un canal supplémentaire ΔFj, qui a été requis par le groupe Gj auquel ce canal a été alloué par défaut).

En particulier, du fait que chaque terminal émetteur Tki du groupe Gk effectue la transmission de son mot d'intention de transmission en utilisant une puissance d'émission prédéfini P0, chaque terminal récepteur Tki est en mesure de déterminer la présence ou l'absence d'une intention de transmission en détectant chacun des mots d'intention de transmission d'un bloc Tx donné.

Une telle détection met en oeuvre une évaluation de la puissance reçue $P_r^{\text{Tx\#k}}$ par chaque terminal récepteur, à l'aide des moyens M2, pour chaque symbole du mot d'intention de transmission d'un terminal émetteur du réseau 1. Lorsque la puissance reçue $P_r^{\text{Tx\#k}}$ par ce terminal récepteur est inférieure à une puissance seuil prédéfinie, alors on considère qu'aucun symbole n'a été transmis.

Dans une troisième étape E3 du procédé de l'invention, chaque terminal récepteur Tki du groupe Gk - qui a reçu une ou plusieurs requêtes de transmission - détermine, à partir d'au moins une stratégie de sélection prédéfinie détaillée ci-après et à l'aide de moyens M3, s'il accepte ou s'il refuse la transmission d'informations et indique, en cas d'acceptation d'une transmission, le terminal émetteur Tki de son groupe Gk choisi pour effectuer la transmission.

En particulier, selon la stratégie de sélection prédéfinie, chaque terminal récepteur Tki dudit groupe Gk détermine à l'aide de moyens M31 appartenant aux moyens M3, dans une première sous-étape E31, le rapport signal sur bruit SNR attendu pour une transmission depuis le ou les terminaux émetteur de son groupe Gk, dont il a reçu la requête de transmission.

Le rapport signal sur bruit SNR attendu est accessible depuis la relation $SNR = \dfrac{P_r^{\text{Tx\#k}}}{Pthermique}$ , en considérant que le canal attribué au groupe Gk considéré n'est utilisé que par un seul terminal émetteur.

Ensuite, dans une deuxième sous-étape E32, chaque terminal récepteur du groupe Gk compare, à un rapport seuil prédéfini γ, les rapports SNR attendus déterminés pour chacun des terminaux émetteur Tki dudit groupe Gk, à l'aide de moyens M32 appartenant aux moyens M3.

Dans une troisième sous-étape E33, chaque terminal récepteur Tki du groupe Gk vérifie, à l'aide de moyens M33 appartenant aux moyens M3, si au moins un critère de sélection supplémentaire est validé pour chaque terminal émetteur dudit groupe Gk détecté.

A titre d'exemple illustratif mais non limitatif, les critères de sélection suivants peuvent être mis en oeuvre dans le cadre de la présente invention :

- lorsqu'une stratégie de priorité des terminaux Tki est mise en oeuvre dans le groupe Gk (autrement dit, on hiérarchise les terminaux Tki par ordre d'importance au sein du groupe Gk), la priorité du terminal émetteur Tki considéré présente une priorité plus élevée que celle associée aux autres terminaux émetteur Tki du groupe Gk. Ainsi, un terminal émetteur Tki qui n'a pas le rapport SNR le plus élevé peut tout de même être sélectionné par un terminal récepteur Tki selon sa priorité ;
- le rapport signal sur bruit SNR attendu déterminé pour le terminal émetteur Tki considéré est supérieur à celui déterminé pour les autres terminaux émetteur Tki du groupe Gk.

A titre de remarque, on peut noter que la priorité des terminaux d'un même groupe peut être actualisée périodiquement ou volontairement. Une telle actualisation peut n'être appliquée qu'à une partie déterminée des terminaux du groupe et non à l'ensemble des terminaux (par exemple pour que certains terminaux aient toujours la même priorité).

Ainsi, dans la troisième étape E3, chaque terminal récepteur accepte la transmission d'informations depuis le terminal émetteur Tki du groupe Gk pour lequel le rapport signal sur bruit SNR attendu correspondant est au moins égal au rapport seuil $\gamma$ et pour lequel le ou les critères de sélection supplémentaires sont validés.

On comprendra que, dans le cas où un seul terminal émetteur Tki a été détecté par un terminal récepteur Tki, le ou les critères de sélection supplémentaire sont automatiquement validés. En outre, dans ce cas, si le rapport SNR attendu est inférieur au rapport seuil $\gamma$, le terminal récepteur considéré refuse la transmission, même si aucune autre transmission n'est prévue par d'autres terminaux émetteur dudit groupe.

Il est à noter que le rapport seuil $\gamma$ correspond au rapport signal sur bruit SNR minimum requis pour la future transmission en considérant le schéma de modulation et de codage MCS le plus robuste qui sera utilisé par le terminal émetteur sélectionné.

Lorsqu'il accepte une transmission depuis un terminal émetteur Tki du groupe Gk, chaque terminal récepteur Tki transmet, dans une quatrième étape E4 et par l'intermédiaire de moyens de transmission M4, un signal de retour aux autres terminaux Tki de son groupe Gk, qui comprend des données relatives au terminal émetteur Tki dont il accepte la transmission d'informations.

Préalablement à l'émission de ce signal de retour, en cas de pluralité de terminaux émetteur Tki du groupe Gk, chaque terminal récepteur Tki du groupe Gk - ayant accepté la transmission depuis un terminal émetteur Tki donné - détermine, dans une première sous-étape supplémentaire E41 et à l'aide de moyens M41 appartenant aux moyens M4, le rapport signal sur interférence SINR (« Signal to Interference-plus-Noise Ratio » en anglais) attendu pour une transmission depuis ce terminal émetteur Tki choisi.

Le rapport signal sur interférence SINR peut être obtenu à partir de la relation $SINR = \dfrac{P_r^{\mathrm{Tx\#k}}}{Pi + Pthermique}$, dans laquelle Pi correspond à la puissance des interférences et $P_{thermique}$ est la puissance du bruit thermique.

Dans une seconde sous-étape E42, chaque terminal récepteur Tki du groupe Gk compare le rapport signal sur interférence SINR ainsi déterminé au rapport seuil $\gamma$, à l'aide de moyens M42 appartenant aux moyens M4.

Chaque terminal récepteur Tki du groupe Gk indique dans son signal de retour :

- lorsque le rapport SINR déterminé associé est au moins égal au rapport seuil $\gamma$, qu'il autorise la transmission d'informations simultanément sur le canal de fréquences ∆Fk alloué audit groupe Gk par un terminal émetteur Tki de son groupe Gk autre que le terminal émetteur Tki qu'il a sélectionné;
- lorsque le rapport SINR déterminé est inférieur au rapport seuil $\gamma$, qu'il refuse toute transmission parallèle simultanée sur le canal de fréquences ∆Fk depuis un autre terminal émetteur Tki du groupe Gk. En d'autres termes, le terminal récepteur Tki considéré demande aux autres terminaux émetteur Tki de son groupe Gk, dont il a refusé la transmission, de ne pas émettre en même temps que le terminal émetteur Tki qu'il a choisi.

Ainsi, le signal de retour émis par chaque terminal récepteur Tki du groupe Gk peut notamment comporter :

- l'identité du terminal émetteur Tki du groupe Gk dont il accepte la transmission d'informations. Dans le cas où une stratégie de priorité est mise en oeuvre au sein de ce groupe Gk, l'identité peut indiquer la priorité du terminal émetteur Tki sélectionné ;
- le statut du canal ∆Fk alloué audit groupe Gk pour indiquer, en cas de pluralité de terminaux émetteur Tki, le refus ou l'autorisation d'émission par ces terminaux émetteur simultanément à la transmission du terminal émetteur Tki sélectionné par le terminal récepteur Tki considéré. On peut noter que toute transmission parallèle peut être refusée par défaut lorsque plus de deux terminaux émetteur Tki sont détectés par le terminal récepteur Tki considéré ;

- le ou les canaux de fréquences ΔFk sur lesquels le terminal émetteur Tki qu'il a choisi souhaite émettre.

Ainsi, le signal de retour de chaque terminal récepteur Tki du groupe Gk peut être intégré dans le premier bloc de réception Rx-A.

En particulier, dans un exemple de réalisation, la structure du premier bloc de réception Rx-A comporte quatre blocs de ressources RB consécutifs dans le temps. Dans chaque bloc de ressources RB, on définit une sous-structure constituée de douze éléments de ressources RE correspondant à deux lignes de six éléments de ressources RE consécutifs, chaque ligne étant associée à une sous-porteuse δf du canal ΔFk alloué au groupe Gk. Le signal de retour se présente donc sous la forme d'un mot de retour de douze éléments de ressources RE, soit douze bits, lorsque le principe de détection ON/OFF est mis en oeuvre pour le traitement du premier bloc de réception Rx-A. Ce dernier présente une durée de 2 ms et permet à l'ensemble des terminaux du groupe Gk de reporter leur perception des transmissions demandées.

En particulier, le mot de retour de chaque terminal récepteur Tki du groupe Gk comprend :

- un élément de ressources RE destiné à indiquer le statut du canal ΔFk du groupe Gk ;
- cinq éléments de ressources RE alloués à l'identité du terminal émetteur Tki sélectionné par le terminal récepteur Tki ; et
- six éléments de ressources RE pour indiquer le ou les canaux ΔFk, ΔFj sur lesquels le terminal émetteur Tki sélectionné désire émettre.

Bien entendu, d'autres structures plus élaborées du mot de retour sont envisageables, mais nécessitent davantage de bande passante. A titre d'exemple, la structure du premier bloc de réception Rx-A peut reprendre en partie la structure d'un signal mis en oeuvre dans un réseau de radiocommunication à large bande LTE. En particulier, le premier bloc de réception Rx-A peut utiliser un canal de contrôle physique PUCCH format 2 (« Physical Uplink Control Channel » en anglais) dédié à l'ordonnancement des ressources et à l'acquittement de requêtes, lorsque la structure de la trame est déjà connue des terminaux Tki. Vingt bits peuvent être utilisés par la mise en oeuvre d'un canal PUCCH dans une paire de blocs de ressources (formant une sous-trame SF). Ainsi, une ou deux sous-trames PUCCH peuvent être nécessaires pour supporter l'identité du terminal émetteur Tki sélectionné par un terminal récepteur Tki du groupe Gk, le statut du canal ΔFk du groupe Gk, ainsi que le ou les canaux sur lesquels le terminal émetteur sélectionné désire émettre.

Par ailleurs, en choisissant judicieusement la puissance d'émission pour chaque terminal récepteur Tki du groupe Gk, il est possible, en cas de pluralité de terminaux émetteur Tki dans le groupe Gk, de reporter aux autres terminaux émetteur Tki le rapport SINR associé à un terminal émetteur Tki considéré.

Plus précisément, si l'on considère un terminal récepteur Tki et deux terminaux émetteur Tki du groupe Gk dont l'un a été accepté par le terminal récepteur Tki et l'autre refusé, selon une première stratégie de puissance, le terminal récepteur Tki émet son signal de retour avec une puissance P0 identique à celle émise par les terminaux émetteur Tki, de sorte que la puissance reçue par ces derniers est égale à $\alpha_i P0$, où $\alpha_i$ est le facteur d'atténuation du chemin de transmission correspondant. Autrement dit, les terminaux émetteur Tki prennent connaissance du rapport signal sur bruit SNR associé à leur future transmission.

Selon une deuxième stratégie de puissance, le terminal récepteur Tki émet son signal de retour avec une puissance $P1 = K/(\alpha_0 P0)$ où K est un facteur constant prédéfini et $\alpha_0$ représentent le facteur d'atténuation du chemin de transmission entre le terminal récepteur Tki et le terminal émetteur Tki sélectionné. Ainsi, la puissance reçue par le terminal émetteur Tki refusé est égale à $(\alpha_1/\alpha_0)(K/P0)$ où $\alpha_1$ représente le facteur d'atténuation du chemin de transmission entre le terminal récepteur Tki et le terminal émetteur Tki refusé. Comme K et P0 sont connus, le rapport $(\alpha_0/\alpha_1)$ est accessible et correspond au rapport signal sur interférence SINR ressenti par le terminal récepteur Tki pour une transmission du terminal émetteur Tki sélectionné.

Selon une troisième stratégie de puissance, le terminal récepteur Tki émet son signal de retour avec une puissance $P2 = K/(\alpha_1 P0)$. De cette manière, le terminal récepteur Tki peut reporter au terminal émetteur Tki sélectionné le rapport $(\alpha_0/\alpha_1)$ représentant le rapport SINR ressenti pour une transmission depuis le terminal émetteur Tki refusé. La mise en oeuvre de cette troisième stratégie permet notamment, comme détaillé par la suite, d'adapter la puissance d'émission du terminal émetteur Tki sélectionné de manière à améliorer le rapport SINR ressenti par le terminal récepteur pour une transmission du terminal émetteur Tki refusé.

Ainsi, de manière à rendre accessible les rapports SNR et SINR à un terminal émetteur Tki du groupe Gk, certains éléments de ressources RE du mot de retour d'un terminal récepteur Tki sont gérés avec la première stratégie de puissance P0 et les autres éléments RE avec la deuxième stratégie de puissance P1. En variante, les trois stratégies de puissance peuvent être mises en oeuvre simultanément, ce qui impose la formation de trois groupes distincts d'éléments de ressources RE associés au mot de retour.

Dans une cinquième étape E5, chaque terminal émetteur Tki du groupe Gk, dont la transmission a été acceptée par au moins un des terminaux récepteur Tki de celui-ci, vérifie, à l'aide de moyens M5, s'il respecte des conditions de transmission prédéterminées avant de transmettre des informations sur le réseau 1.

En particulier, dans une première sous-étape E51, chaque terminal émetteur Tki du groupe Gk sélectionné pour transmettre calcule par l'intermédiaire de moyens M51 appartenant aux moyens M5 :

- un rapport R1 défini par la relation suivante :

$$R1 = \frac{N_{OK}}{N_{OK} + N_{KO}}$$

dans laquelle :

  ▪ $N_{OK}$ désigne le nombre de terminaux récepteur Tki du groupe Gk ayant accepté la transmission d'informations du terminal émetteur Tki considéré (désignés terminaux d'acceptation) ;
  ▪ $N_{KO}$ désigne le nombre de terminaux récepteur Tki du groupe Gk ayant refusé la transmission d'informations du terminal émetteur Tki considéré (désignés terminaux de refus) et ayant accepté la transmission d'informations d'un autre terminal émetteur Tki dudit groupe Gk,

- et un rapport R2 défini par la relation suivante :

$$R2 = \frac{N_{OK} + N_{KO}}{N_{Total}^{DMOGroup\#k}}$$

dans laquelle $N_{Total}^{DMOGroup\#k}$ désigne le nombre total de terminaux Tki dudit groupe Gk.

Dans une deuxième sous-étape E52, chaque terminal émetteur sélectionné compare, à l'aide de moyens M52 appartenant aux moyens M5, les rapports R1 et R2 ainsi déterminés respectivement à un premier seuil S1 et un deuxième seuil S2 et décide, dans une dernière sous-étape E53, que les conditions de transmission sont respectées lorsque les rapports R1 et R2 sont respectivement supérieurs aux seuils S1 et S2.

Dans le cas où au moins un des rapports R1 et R2 est au plus égal au seuil S1, S2 correspondant, les conditions de transmission ne sont pas respectées.

Ainsi, la décision de transmettre est prise par un terminal émetteur Tki sélectionné du groupe Gk si le nombre de terminaux récepteur Tki de son groupe qui sont accessibles est suffisant en comparaison du nombre total de terminaux du groupe Gk (critère associé au rapport R2) et si la proportion de terminaux récepteur Tki ayant accepté de recevoir des informations depuis ce terminal émetteur Tki est acceptable (critère associé au rapport R1).

Les seuils S1 et S2 peuvent être configurés de toute manière désirée et notamment dépendre, lorsqu'une stratégie de priorité est mise en oeuvre au sein du groupe Gk, de la priorité du terminal émetteur Tki considéré.

En complément, des conditions de transmission supplémentaires peuvent être mises en oeuvre. Ainsi, dans une troisième sous-étape E53 de l'étape E5, lorsqu'une stratégie de priorité des terminaux est définie dans le groupe Gk, chaque terminal émetteur Tki sélectionné vérifie, à l'aide de moyens M53 appartenant aux moyens M5, si, parmi les terminaux récepteur Tki ayant refusé de recevoir des informations de sa part, au moins un d'entre eux présente une priorité supérieure à celle des terminaux récepteur Tki ayant accepté la transmission depuis ledit terminal émetteur Tki considéré.

Dans le cas où au moins un terminal récepteur Tki de refus possède une priorité supérieure à celle des terminaux récepteur Tki d'acceptation, le terminal émetteur Tki considéré décide de ne pas transmettre d'informations sur le réseau 1. Dans le cas contraire, il décide d'émettre.

En complément encore, dans une sous-étape supplémentaire E54 de l'étape E5, en cas de pluralité de terminaux émetteur et lorsqu'une stratégie de priorité est ou non mise en oeuvre au sein du groupe Gk, chaque terminal émetteur Tki du groupe considéré Gk peut à l'aide de moyens M54 appartenant aux moyens M5, lorsque le rapport SINR associé à tous les terminaux récepteur Tki d'autorisation est au moins égal au rapport seuil $\gamma$ :

- déterminer le rapport SNR minimum $SNR_{min}$ associé aux terminaux récepteur Tki d'autorisation ;
- établir la différence $\alpha$ entre le rapport $SNR_{min}$ et le rapport seuil $\gamma$ (soit $\alpha = SNR_{min} - \gamma$). Cette différence $\alpha$ représente la marge de puissance qui peut être offerte par le terminal émetteur Tki considéré aux terminaux récepteur Tki de refus pour lesquels le rapport SINR associé est inférieur au rapport seuil $\gamma$. En effet, en réduisant la puissance d'émission du terminal émetteur Tki considéré d'une valeur $\alpha$ dB, le rapport SINR associé aux terminaux Tki de refus est amélioré de $\alpha$ dB et peut ainsi atteindre le rapport seuil $\gamma$ ;
- déterminer le nombre $N_{KO}^{Clean}$ de terminaux récepteur Tki de refus du groupe Gk, dont le rapport SINR associé est inférieur au rapport seuil $\gamma$ ;
- calculer le nouveau rapport $SINR_{new}$ associé à chacun des terminaux récepteur Tki de refus - dont le rapport SINR associé est inférieur au rapport seuil $\gamma$ - en commençant par celui associé au terminal récepteur Tki de refus présentant le rapport SNR maximum, de la façon suivante :

$$SINR_{new} = SINR + \alpha \ ;$$

- comparer chaque nouveau rapport $SINR_{new}$ ainsi calculé au rapport seuil $\gamma$ ;

- déterminer le nombre $N_{KO}^{Saved}$ de terminaux récepteur Tki de refus du groupe Gk dont le nouveau rapport $SINR_{new}$ associé est au moins égal au rapport seuil $\gamma$ ;
- calculer un rapport R3 défini par la relation suivante :

$$R3 = \frac{N_{KO}^{Saved}}{N_{KO}^{Clean}} \; ;$$

- comparer le rapport R3 ainsi calculé à un troisième seuil S3 ; et
- décider que les conditions de transmission sont respectées lorsque le rapport R3 est supérieur au troisième seuil S3.

Dans le cas où les conditions de transmission sont respectées, chaque terminal émetteur Tki du groupe Gk, qui a décidé de transmettre des informations sur le réseau 1, peut choisir de mettre en oeuvre une stratégie d'optimisation correspondant à une adaptation de puissance et/ou à une adaptation du schéma de modulation et de codage MCS.

En particulier, la mise en oeuvre d'une telle stratégie d'optimisation repose sur :

- la détermination du rapport SNR minimum $SNR_{min}$ associé aux terminaux récepteur Tki d'autorisation ayant accepté la transmission du terminal émetteur Tki considéré ; et
- le calcul de la différence $\alpha$ entre le rapport $SNR_{min}$ et le rapport seuil $\gamma$.

Ainsi, selon que la stratégie d'optimisation se rapporte à une adaptation de puissance ou à une adaptation du schéma de modulation et de codage MCS, la différence $\alpha$ ainsi calculée est utilisée pour sélectionner une nouvelle puissance d'émission (afin par exemple de réduire les interférences produites) et/ou pour sélectionner un nouveau schéma de codage et de modulation (par exemple avec moins de protection afin d'améliorer le débit de données).

Une telle stratégie d'optimisation peut par exemple être mise en oeuvre lorsqu'au moins un des terminaux récepteur Tki de refus du groupe Gk présente un rapport SINR attendu correspondant inférieur au rapport seuil $\gamma$.

Préalablement à la transmission d'informations sur le réseau lors d'une sixième étape E6, chaque terminal émetteur Tki du groupe Gk, qui a décidé d'émettre, détermine dans une étape supplémentaire le ou les canaux supplémentaires $\Delta$Fj (j≠k) qu'il peut utiliser pour transmettre les informations sur le réseau 1. A partir de notifications (prenant par exemple la forme du bloc de réception Rx-B) qu'il a reçues de terminaux Tji n'appartenant pas au groupe Gk, chaque terminal émetteur Tki de ce dernier peut déterminer la disponibilité des ressources allouées aux groupes Gj.

Ainsi, il peut s'appuyer sur le second bloc de réception Rx-B dans lequel sont reportées les intentions d'utilisation des canaux $\Delta$Fj par des terminaux émetteur Tji des groupes Gj du réseau 1, autres que le groupe Gk considéré.

En particulier, dans un exemple de réalisation, la structure du second bloc de réception Rx-B comporte cinq sous-structures formées chacune de deux colonnes de douze éléments de ressources RE (soit vingt-quatre éléments de ressources par sous-structure correspondant aux vingt-quatre utilisateurs d'un groupe). Autrement dit, un élément de ressources RE de chaque sous-structure est associé à un terminal Tji du groupe Gj auquel la sous-structure est affectée. Ainsi, moins de 1 ms est nécessaire pour la transmission du second bloc de réception Rx-B.

En variante, d'autres structures plus élaborées du second bloc de réception Rx-B sont envisageables. A titre d'exemple, la structure du second bloc de réception Rx-B peut également reprendre en partie la structure d'un signal mis en oeuvre dans un réseau LTE. Le second bloc de réception Rx-B peut alors utiliser un canal SRS (« Sounding Reference Signal » en anglais) du réseau LTE pour reporter les intentions d'utilisation des canaux par des terminaux émetteur Tji des groupes Gj du réseau 1, autres que le groupe Gk considéré.

Lorsqu'un canal de fréquences $\Delta$Fj - non alloué au groupe Gk d'un terminal émetteur Tki et requis par ce dernier - est indiqué comme indisponible dans le second bloc de réception Rx-B, le terminal émetteur Tki considéré n'utilisera par ce canal lors de sa transmission d'informations. Par contre, lorsqu'un canal $\Delta$Fj d'un autre groupe Gj est disponible et a été demandé par le terminal émetteur Tki considéré, ce dernier émettra, lors de la sixième étape E6, sur son canal $\Delta$Fk alloué par défaut et sur cet autre canal $\Delta$Fj requis disponible.

Par ailleurs, et afin de pouvoir réaliser le partage de canaux de fréquences entre les différents groupes du réseau, la mise en oeuvre du procédé décrit ci-dessus requiert la synchronisation complète des différents canaux de fréquences $\Delta$Fk, $\Delta$Fj du réseau 1.

Bien que le procédé de l'invention ait été décrit ci-dessus pour des groupes Gk séparés en fréquences (un canal de fréquences étant alloué par défaut à chaque groupe du réseau), la présente invention s'applique également pour des groupes Gk séparés en temps, c'est-à-dire que chaque groupe peut émettre successivement pendant des fentes temporelles allouées sur un ensemble commun de fréquences. Autrement dit, la présente invention peut être mise en oeuvre dans un réseau de radiocommunication fonctionnant soit en mode duplex à division de fréquences FDD (« Frequency Division Duplex » en anglais), soit en mode duplex à division du temps TDD (« Time Division Duplex » en anglais).

## Revendications

1. Procédé pour établir une transmission d'informations entre un terminal mobile émetteur (Tki) et au moins un terminal mobile récepteur (Tki) d'un même groupe de terminaux (Gk) appartenant à un réseau (1) de radiocommunication à ressources partagées, ce dernier opérant en mode direct et comprenant une pluralité de terminaux mobiles (Tki, Tji) organisés en groupe (Gk, Gj), comprenant les étapes suivantes :

   E1/ au moins un terminal (Tki) d'un groupe donné (Gk) de terminaux dudit réseau (1), dit premier terminal émetteur, émet une requête de transmission (Tx) pour informer les autres terminaux (Tki) dudit groupe (Gk) de son intention de leur transmettre des informations en utilisant des ressources allouées à son groupe, voire des ressources allouées aux autres groupes ;
   E2/ au moins certains des autres terminaux (Tki) dudit groupe (Gk) surveillent l'émission d'une telle requête de transmission ;
   E3/ chaque terminal (Tki) dudit groupe (Gk) qui a reçu ladite requête de transmission (Tx), dit terminal récepteur, détermine, à partir d'au moins une stratégie de sélection prédéfinie, s'il accepte la transmission d'informations par ledit premier terminal émetteur (Tki) ;
   E4/ en cas d'acceptation de ladite transmission, chaque terminal récepteur (Tki) transmet aux autres terminaux (Tki) de son groupe (Gk) un signal de retour (Rx-A) comprenant des données relatives audit premier terminal émetteur (Tki), notamment son identité ;
   E5/ après réception dudit signal de retour, ledit premier terminal émetteur (Tki) vérifie s'il respecte des conditions de transmission prédéterminées ; et
   E6/ dans le cas où lesdites conditions de transmission sont respectées, ledit premier terminal émetteur (Tki) transmet lesdites informations aux autres terminaux (Tki) de son groupe (Gk) sur au moins une ressource allouée (ΔFk) audit groupe (Gk).

2. Procédé selon la revendication précédente, préalablement à l'étape E6, ledit premier terminal émetteur (Tki) reçoit une ou plusieurs notifications de terminaux (Tji) n'appartenant pas audit groupe considéré (Gk), à partir desquelles il détermine la disponibilité des ressources allouées aux groupes (Gj) autres que ledit groupe (Gk).

3. Procédé selon l'une des revendications précédentes, dans lequel, selon ladite stratégie de sélection prédéfinie mise en oeuvre lors de l'étape E3, chaque terminal récepteur (Tki) dudit groupe (Gk) :

   - détermine (E31) le rapport signal sur bruit (SNR) attendu pour une transmission depuis ledit premier terminal émetteur (Tki) ;
   - compare (E31) le rapport signal sur bruit (SNR) ainsi déterminé à un premier rapport seuil ($\gamma$) ; et
   - accepte la transmission d'informations que souhaite transmettre ledit premier terminal émetteur (Tki), lorsque le rapport signal sur bruit (SNR) déterminé est au moins égal audit premier rapport seuil ($\gamma$).

4. Procédé selon la revendication précédente, dans lequel, lorsqu'au moins un autre terminal émetteur (Tki) dudit groupe (Gk), dit second terminal émetteur, souhaite également transmettre simultanément des informations aux autres terminaux (Tki) dudit groupe (Gk), chaque terminal récepteur (Tki), selon ladite stratégie de sélection prédéfinie mise en oeuvre lors de l'étape E3/:

   - détermine (E31) le rapport signal sur bruit (SNR) attendu pour une transmission depuis le second terminal émetteur ;
   - compare (E32) le rapport signal sur bruit (SNR) ainsi déterminé audit premier rapport seuil ($\gamma$) ;
   - vérifie (E33) qu'au moins un critère de sélection supplémentaire est validé ;
   - et accepte la transmission d'informations depuis le premier terminal émetteur (Tki) lorsque le rapport signal sur bruit (SNR) attendu correspondant est au moins égal audit premier rapport seuil ($\gamma$) et que ledit critère de sélection supplémentaire est validé.

5. Procédé selon la revendication précédente, dans lequel ledit critère de sélection supplémentaire appartient au groupe de critères suivant :

   - dans le cas où une stratégie de priorité des terminaux (Tki,Tji) est mise en oeuvre dans ledit groupe (Gk), la priorité du premier terminal émetteur (Tki) présente une priorité plus élevée que celle associée au second terminal émetteur (Tki), voire aux autres terminaux émetteur (Tki) dudit groupe (Gk) qui souhaitent également transmettre ;
   - le rapport signal sur bruit (SNR) déterminé correspondant au premier terminal émetteur (Tki) est supérieur à celui correspondant au second terminal émetteur (Tki), voire aux autres terminaux émetteur (Tki) dudit groupe (Gk) qui souhaitent également transmettre.

6. Procédé selon l'une des revendications précédentes 4 ou 5, dans lequel, préalablement à l'étape E4, chaque terminal récepteur (Tki) dudit groupe (Gk) ayant accepté la transmission depuis le premier terminal émetteur :

- détermine (E41) le rapport signal sur interférence (SINR) attendu pour une transmission depuis le premier terminal émetteur (Tki) dont la transmission d'informations est acceptée ;
- compare (E42) le rapport signal sur interférence (SINR) ainsi déterminé à un second rapport seuil ($\gamma$), de préférence égal audit premier rapport seuil ($\gamma$) ; et
- indique dans son signal de retour :

  ▪ lorsque le rapport signal sur interférence (SINR) déterminé est au moins égal audit second rapport seuil ($\gamma$), qu'il autorise la transmission d'informations simultanément sur la ressource allouée audit groupe (Gk) par un terminal émetteur (Tki) dudit groupe (Gk) autre que ledit premier terminal émetteur (Tki) ;
  ▪ lorsque le rapport signal sur interférence (SINR) déterminé est inférieur audit second rapport seuil ($\gamma$), qu'il refuse la transmission d'informations simultanément sur la ressource allouée audit groupe (Gk) par un terminal émetteur (Tki) dudit groupe (Gk) autre que ledit premier terminal émetteur (Tki).

7. Procédé selon l'une des revendications précédentes, dans lequel, lors de l'étape de vérification E5, ledit premier terminal émetteur (Tki) :

   - calcule (E51) un rapport R1 défini par la relation suivante :

   $$R1 = \frac{N_{OK}}{N_{OK} + N_{KO}}$$

   dans laquelle :

   ▪ $N_{OK}$ désigne le nombre de terminaux récepteur (Tki) dudit groupe (Gk) ayant accepté la transmission d'informations du premier terminal émetteur (Tki) ; et
   ▪ $N_{KO}$ désigne le nombre de terminaux récepteur (Tki) ayant refusé la transmission d'informations du premier terminal émetteur (Tki) et ayant accepté la transmission d'informations d'un autre terminal émetteur (Tki) dudit groupe (Gk) ;

   - calcule (E51) un rapport R2 défini par la relation suivante :

   $$R2 = \frac{N_{OK} + N_{KO}}{N_{Total}^{DMOGroup\#k}}$$

dans laquelle $N_{Total}^{DMOGroup\#k}$ désigne le nombre total de terminaux (Tki) dudit groupe (Gk) ;
- compare les rapports R1 et R2 respectivement à un premier seuil (S1) et un second seuil (S2) ; et
- décide que lesdites conditions de transmission sont respectées lorsque les rapports R1 et R2 sont respectivement supérieurs aux premier et second seuils (S1, S2).

8. Procédé selon la revendication précédente, dans lequel, une stratégie de priorité des terminaux étant définie dans ledit groupe (Gk), ledit premier terminal émetteur (Tki) :

   - vérifie si, parmi les terminaux récepteur (Tki) ayant refusé de recevoir des informations de sa part, au moins l'un d'entre eux présente une priorité supérieure à celle des terminaux récepteur (Tki) ayant accepté la transmission depuis ledit premier terminal émetteur (Tki) ; et
   - décide que lesdites conditions de transmission sont respectées, lorsque les terminaux récepteur (Tki) ayant refusé de recevoir des informations de sa part ne possèdent pas de priorité supérieure à celle des terminaux récepteur (Tki) ayant accepté la transmission.

9. Procédé selon l'une des revendications précédentes, dans lequel la requête de transmission (Tx) comprend l'identité du premier terminal émetteur (Tki), son intention de démarrer une transmission d'informations et les ressources allouées ($\Delta$Fj) aux autres groupes (Gj) dudit réseau (1) sur lesquelles le premier terminal émetteur souhaite transmettre des informations.

10. Procédé selon l'une des revendications précédentes, dans lequel :

    - le premier terminal émetteur (Tki) reçoit des données sur la disponibilité des ressources allouées ($\Delta$Fj) par défaut aux autres groupes (Gj) qu'il souhaite utiliser lors de sa transmission d'informations ; et
    - lors de l'étape E6/, le premier terminal émetteur (Tki) transmet les informations sur la ressource allouée ($\Delta$Fk) par défaut à son groupe (Gk) et sur les ressources ($\Delta$Fj) souhaitées des autres groupes (Gj) qui sont disponibles.

11. Procédé selon l'une des revendications précédentes, dans lequel, lorsque lesdites conditions de transmission sont respectées, ledit premier terminal émetteur (Tki), qui a décidé de transmettre des informations aux autres terminaux (Tki) de son groupe (Gk), met en oeuvre une stratégie d'optimisation correspondant à une adaptation de puissance et/ou à une adaptation du schéma de modulation et de codage.

12. Terminal mobile appartenant à un réseau (1) de radiocommunication à ressources partagées, ce dernier opérant en mode direct et comprenant une pluralité de terminaux mobiles (Tki, Tji) organisés en groupe (Gk, Gj), comprenant :

- des moyens (M1) pour émettre une requête de transmission (Tx) afin d'informer les autres terminaux (Tki) de son groupe (Gk) de son intention de leur transmettre des informations ;
- des moyens (M2) pour surveiller l'émission d'une requête de transmission (Tx) en provenance de terminaux émetteur (Tki) de son groupe (Gk) ;
- des moyens (M3) pour déterminer, à partir d'au moins une stratégie de sélection prédéfinie, s'il accepte la transmission d'informations depuis un terminal émetteur (Tki) de son groupe (Gk) dont il a reçu une requête de transmission (Tx) ;
- des moyens (M4) pour transmettre un signal de retour (Rx-A) aux autres terminaux (Tki) de son groupe (Gk) comprenant des données relatives à un terminal émetteur (Tki) dont il a accepté une transmission d'informations ;
- des moyens (M5) pour vérifier, en cas de réception d'un signal de retour d'au moins un terminal récepteur (Tki) de son groupe (Gk), s'il respecte des conditions de transmission prédéterminées ; et
- des moyens (M6) pour transmettre des informations aux autres terminaux (Tki) de son groupe (Gk) sur au moins une ressource allouée (ΔFk) audit groupe (Gk), dans le cas où lesdites conditions de transmission sont respectées.

13. Réseau de radiocommunication à ressources partagées opérant en mode direct et comprenant une pluralité de terminaux mobiles (Tki, Tji) organisés en groupe (Gk, Gj), lesdits terminaux mobiles (Tki, Tji) étant aptes à mettre en oeuvre le procédé tel que spécifié par les revendications 1 à 11.

14. Réseau de radiocommunication à ressources partagées opérant en mode direct et comprenant une pluralité de terminaux mobiles (Tki, Tji) organisés en groupe (Gk, Gj), lesdits terminaux mobiles (Tki, Tji) étant tels que spécifié par la revendication 12.

**Patentansprüche**

1. Verfahren zur Herstellung einer Übertragung von Informationen zwischen einem mobilen Senderterminal (Tki) und wenigstens einem mobilen Empfängerterminal (Tki) einer und derselben Gruppe von Terminals (Gk), die zu einem Funkkommunikationsnetz (1) mit geteilten Ressourcen gehört, wobei letzteres im direkten Modus arbeitet und eine Vielzahl von mobilen Terminals (Tki, Tji) umfasst, die in Gruppen (Gk, Gj) organisiert sind, umfassend die folgenden Schritte:

E1/ wenigstens ein Terminal (Tki) einer bestimmten Gruppe (Gk) von Terminals des genannten Netzes (1), bezeichnet als erstes Senderterminal, sendet eine Übertragungsanfrage (Tx), um die anderen Terminals (Tki) der genannten Gruppe (Gk) über seine Absicht zu informieren, Informationen auf sie zu übertragen, indem es die seiner Gruppe zugeordneten Ressourcen bzw. die den anderen Gruppen zugeordneten Ressourcen verwendet;
E2/ wenigstens bestimmte andere Terminals (Tki) der genannten Gruppe (Gk) überwachen die Sendung einer derartigen Übertragungsanfrage;
E3/ jedes Terminal (Tki) der genannten Gruppe (Gk), das die genannte Übertragungsanfrage (Tx) erhalten hat, bezeichnet als Empfängerterminal, bestimmt ausgehend von wenigstens einer vordefinierten Auswahlstrategie, ob es die Übertragung von Informationen von dem genannten ersten Senderterminal (Tki) akzeptiert;
E4/ bei einer Akzeptanz der genannten Übertragung überträgt jedes Empfängerterminals (Tki) ein Rücksignal (Rx-A) auf die anderen Terminals (Tki) seiner Gruppe (Gk), das Daten bezüglich des genannten ersten Senderterminals (Tki), insbesondere seine Identität, umfasst;
E5/ nach dem Empfang des genannten Rücksignals überprüft der genannte erste Terminalsender (Tki), ob es vorbestimmte Übertragungsbedingungen einhält; und
E6/ in dem Fall, in dem die genannten Übertragungsbedingungen eingehalten sind, überträgt der genannte erste Terminalsender (Tki) die genannten Informationen auf die anderen Terminals (Tki) seiner Gruppe (Gk) auf wenigstens eine der genannten Gruppe (Gk) zugeordnete Ressource (ΔFk).

2. Verfahren gemäß dem voranstehenden Anspruch, vor dem Schritt E6 empfängt das genannte Senderterminal (Tk) eine oder mehrere Terminalbenachrichtigung(en) (Tji), die nicht zu der betrachteten Gruppe (Gk) gehört / gehören, von denen ausgehend es die Verfügbarkeit der den anderen Gruppen (Gj) als der genannten Gruppe (Gk) zugeordneten Ressourcen bestimmt.

3. Verfahren gemäß einem der voranstehenden Ansprüche, bei dem gemäß der genannten, in Schritt E3 umgesetzten vordefinierten Auswahlstrategie jedes Empfängerterminal (Tki) der genannten Gruppe (GK9):

- das erwartete Verhältnis Signal zu dem Brutto (SNR) für eine Übertragung von dem genannten ersten Senderterminal (Tki) bestimmt (E31);
- das auf diese Weise bestimmte Verhältnis Signal zu dem Brutto (SNR) mit einem ersten Schwellenverhältnis (γ) vergleicht (E31); und
- die Übertragung von Informationen akzeptiert, die das genannte erste Senderterminal (Tki) übertragen möchte, wenn das bestimmte Verhältnis Signal zu Geräusch (SNR) wenigstens gleich dem ersten Schwellenverhältnis (γ) ist.

4. Verfahren gemäß dem voranstehenden Anspruch, bei dem, wenn wenigstens ein anderes Senderterminal (Tki) der genannten Gruppe (Gk), bezeichnet als zweites Senderterminal, ebenfalls gleichzeitig Informationen auf die anderen Terminals (Tki) der genannten Gruppe (Gk) übertragen möchte, jedes Empfängerterminal (Tki) gemäß der genannten, in Schritt E3/ umgesetzte vordefinierten Auswahlstrategie:

- das für eine Übertragung von dem zweiten Senderterminal erwartete Verhältnis Signal zum Geräusch (SNR) bestimmt (E31);
- das auf diese Weise bestimmte Verhältnis Signal zum Geräusch (SNR) mit dem genannten ersten Schwellenverhältnis (γ) vergleicht (E32);
- überprüft (E33), dass wenigstens ein zusätzliches Auswahlkriterium validiert ist;
- und die Übertragung von Informationen von dem ersten Senderterminal (Tki) akzeptiert, wenn das erwartete entsprechende Verhältnis Signal zum Geräusch (SNR) wenigstens gleich dem genannten ersten Schwellenverhältnis (γ) ist und das genannte zusätzliche Auswahlkriterium validiert ist.

5. Verfahren gemäß dem voranstehenden Anspruch, bei dem das genannte zusätzliche Auswahlkriterium zur folgenden Gruppe von Kriterien gehört:

- in dem Fall, in dem eine Prioritätsstrategie der Terminals (Tki, Tji) in der genannten Gruppe (Gk) umgesetzt ist, weist die Priorität des genannten ersten Senderterminals (Tki) eine höhere Priorität auf als die, die dem zweiten Senderterminal (Tki) bzw. den anderen Senderterminals (Tki) der genannten Gruppe (Gk), die ebenfalls übertragen möchten, zugeordnet ist;
- das bestimmte Verhältnis Signal zum Geräusch (SNR), das dem ersten Senderterminal (Tki) entspricht, ist größer als das, das dem zweiten Senderterminal (Tki) bzw. den anderen Senderterminals (Tki) der genannten Gruppe (Gk) entspricht, die ebenfalls übertragen möchten.

6. Verfahren gemäß einem der voranstehenden Ansprüche 4 oder 5, bei dem vor dem Schritt E4 jedes Empfängerterminal (Tki) der genannten Gruppe, das die Übertragung von dem ersten Senderterminal akzeptier hat:

- das erwartete Verhältnis Signal zur Interferenz (SINR) für eine Übertragung von dem ersten Senderterminal (Tki) bestimmt (E41), dessen Übertragung von Informationen akzeptiert ist;
- das auf diese Weise bestimmte Verhältnis Signal zur Interferenz (SINR) mit einem zweiten Schwellenverhältnis (γ) vergleicht (E42), das bevorzugt gleich dem ersten Schwellenwert (γ) ist; und
- in seinem Rücksignal angibt:

  ▪ wenn das bestimmte Verhältnis Signal zur Interferenz (SINR) wenigstens gleich dem genannten zweiten Schwellenverhältnis (γ) ist, dass es die Übertragung von Informationen gleichzeitig auf die Ressource erlaubt, die der genannten Gruppe (Gk) durch ein Senderterminal (Tki) der genannten Gruppe (Gk) zugeordnet ist, die nicht das genannte erste Senderterminal (Tki) ist;
  ▪ wenn das bestimmte Verhältnis Signal zur Interferenz (SINR) geringer ist als der genannte zweite Schwellenwert (γ), dass er die Übertragung von Informationen gleichzeitig auf die Ressource erlaubt, die der genannten Gruppe (Gk) durch ein Senderterminal (Tki) der genannten Gruppe (Gk) zugeordnet ist, die nicht das genannte erste Senderterminal (Tki) ist.

7. Verfahren gemäß einem der voranstehenden Ansprüche, bei dem, bei dem Überprüfungsschritt E5 das genannte erste Senderterminal (Tki):

- ein Verhältnis R1 berechnet (E51), das von der folgenden Relation definiert ist:

$$R1 = \frac{N_{OK}}{N_{OK} + N_{KO}}$$

bei dem:

  ▪ $N_{OK}$ die Anzahl von Empfängerterminals (Tki) der genannten Gruppe (Gk) bezeichnet, die die Übertragung von Informationen vom ersten Senderterminal (Tki) akzeptiert haben; und

▪ N$_{KO}$ die Anzahl von Senderterminals (Tki) bezeichnet, die die Übertragung von Informationen des ersten Senderterminals (Tki) abgelehnt haben und die Übertragung von Informationen von einem anderen Senderterminal (Tki) der genannten Gruppe (Gk) akzeptiert haben;

- ein Verhältnis R2 berechnet (E51), das von der folgenden Relation definiert ist:

$$R2 = \frac{N_{OK} + N_{KO}}{N_{Total}^{DMOGroup\#k}}$$

bei dem $N_{Total}^{DMOGroup\#k}$ die Gesamtzahl von Terminals (Tki) der genannten Gruppe (Gk) bezeichnet;
- die Verhältnisse R1 und R2 jeweils mit einem ersten Schwellenwert (S1) und einem zweiten Schwellenwert (S2) vergleicht; und
- entscheidet, dass die genannten Übertragungsbedingungen eingehalten sind, wenn die Verhältnisse R1 und R2 jeweils größer sind als der erste und der zweite Schwellenwert (S1, S2).

8. Verfahren gemäß dem voranstehenden Anspruch, bei dem, wenn eine Prioritätsstrategie der Terminals in der genannten Gruppe (Gk) definiert ist, das genannte erste Senderterminal (Tki):

    - überprüft, ob von den Empfängerterminals (Tki), die den Empfang der Informationen seinerseits abgelehnt haben, wenigstens eines von ihnen eine höhere Priorität aufweist als die der Empfängerterminals (Tki), die die Übertragung von dem genannten ersten Senderterminal (Tki) akzeptiert haben; und
    - entscheidet, dass die genannten Übertragungsbedingungen eingehalten sind, wenn die Empfängerterminals (Tki), die den Empfang der Informationen seinerseits abgelehnt haben, keine höhere Priorität besitzen als die der Empfängerterminals (Tki), die die Übertragung akzeptiert haben.

9. Verfahren gemäß irgendeinem der voranstehenden Ansprüche, bei dem die Übertragungsanfrage (Tx) die Identität des ersten Senderterminals (Tki), seine Absicht zum Starten einer Übertragung von Informationen und die Ressourcen umfasst, die den anderen Gruppen (Gj) des genannten Netzes (1) zugeordnet sind (ΔFj), über die das erste Senderterminal Informationen übertragen möchte.

10. Verfahren gemäß einem der voranstehenden Ansprüche, bei dem:

    - das erste Senderterminal (Tki) Daten über die Verfügbarkeit der Ressourcen empfängt, die den anderen Gruppen (Gj), die es bei seiner Übertragung von Informationen verwenden möchte, automatisch zugeordnet (ΔFj) sind;
    - in dem Schritt E6/ das erste Senderterminal (Tki) die Informationen über die Ressource, die seiner Gruppe (Gk) automatisch zugeordnet (ΔFj) ist, und auf andere Gruppen (Gj), die verfügbar sind, überträgt.

11. Verfahren gemäß einem der voranstehenden Ansprüche, bei dem, wenn die genannten Übertragungsbedingungen eingehalten sind, das genannte erste Senderterminal (Tki), das entschieden hat, Informationen auf die anderen Terminals (Tki) seiner Gruppe (Gk) zu übertragen, eine Optimierungsstrategie umsetzt, die einer Leistungsanpassung und / oder einer Anpassung des Modulations- und Codierungsschemas entspricht.

12. Mobiles Terminal, das zu einem Funkkommunikationsnetz (1) mit geteilten Ressourcen gehört, wobei letzteres im direkten Modus arbeitet und eine Vielzahl von mobilen Terminals (Tki, Tji) umfasst, die in Gruppen (Gk, Gj) organisiert sind, umfassend:

    - Mittel (M1) zum Senden einer Übertragungsanfrage (Tx), um die anderen Terminals (Tki) seiner Gruppe (Gk) über seine Absicht zu informieren, Informationen auf sie zu übertragen;
    - Mittel (M2) zur Überwachung des Sendens einer Übertragungsanfrage (Tx) aus Senderterminals (Tki) seiner Gruppe (Gk);
    - Mittel (M3) zur Bestimmung ausgehend von wenigstens einer vordefinierten Auswahlstrategie, ob es die Übertragung von Informationen von einem Senderterminal (Tki) seiner Gruppe (Gk) akzeptiert, von dem es eine Übertragungsanfrage (Tx) empfangen hat;
    - Mittel (M4) zur Übertragung eines Rücksignals (Rx-A) auf die anderen Terminals (Tki) seiner Gruppe (Gk), umfassend Daten bezüglich eines Senderterminals (Tki), von dem es eine Übertragung von Informationen akzeptiert hat;
    - Mittel (M5) zur Überprüfung für den Fall eines Empfangs eines Rücksignals wenigstens eines Empfängerterminals (Tki) seiner Gruppe (Gk), ob es vorbestimmte Übertragungsbedingungen einhält; und

- Mittel (M6) zur Übertragung von Informationen auf die anderen Terminals (Tki) seiner Gruppe (Gk) auf wenigstens eine Ressource, die der genannten Gruppe (Gk) zugeordnet (ΔFk) ist, für den Fall, dass die genannten Übertragungsbedingungen eingehalten sind.

13. Funkkommunikationsnetz mit geteilten Ressourcen, die im direkten Modus arbeiten und eine Vielzahl von mobilen Terminals (Tki, Tji) umfassen, die in Gruppen (Gk, Gj) organisiert sind, wobei die genannten mobilen Terminals (Tki, Tji) geeignet sind, das Verfahren gemäß Spezifikation durch die Ansprüche 1 bis 11 umzusetzen.

14. Funkkommunikationsnetz mit geteilten Ressourcen, das im direkten Modus arbeitet und eine Vielzahl von mobilen Terminals (TKi, Tji) umfasst, die in Gruppen (Gk, Gj) organisiert sind, wobei die genannten mobilen Terminals (Tki, Tji) derart sind, wie in Anspruch 12 spezifiziert.

**Claims**

1. A method for establishing a transmission of information between a sending mobile terminal (Tki) and at least one receiving mobile terminal (Tki) of a same group of terminals (Gk) belonging to a trunked radio network (1), the latter operating in direct mode and comprising a plurality of mobile terminals (Tki, Tji) organised into groups (Gk, Gj), comprising the following steps:

E1/at least one terminal (Tki) of a given group (Gk) of terminals of said network (1), known as the first sending terminal, sends a transmission request (Tx) to inform the other terminals (Tki) of said group (Gk) of its intention to transmit information thereto by using resources allocated to its group, or even resources allocated to the other groups;

E2/ at least some of the other terminals (Tki) of said group (Gk) monitor the sending of such a transmission request;

E3/ each terminal (Tki) of said group (Gk) which received said transmission request (Tx), known as the receiving terminal, determines, from at least one predefined selection strategy, whether it accepts the transmission of information by said first sending terminal (Tki);

E4/ in case said transmission is accepted, each receiving terminal (Tki) transmits to the other terminals (Tki) of its group (Gk) a return signal (Rx-A) comprising data relative to said first sending terminal (Tki), in particular its identity;

E5/ after receiving said return signal, said first sending terminal (Tki) checks whether it meets the predetermined transmission conditions; and

E6/ in the case where said transmission conditions are met, said first sending terminal (Tki) transmits said information to the other terminals (Tki) of its group (Gk) on at least one resource (ΔFk) allocated to said group (Gk).

2. The method according to the previous claim, prior to step E6, said first sending terminal (Tki) receives one or more notifications from terminals (Tji) not belonging to said considered group (Gk), from which it determines the availability of the resources allocated to the groups (Gj) other than said group (Gk).

3. The method according to one of the previous claims, wherein, according to said predefined selection strategy implemented during step E3, each receiving terminal (Tki) of said group (Gk):

- determines (E31) the expected signal to noise ratio (SNR) for a transmission from said first sending terminal (Tki);
- compares (E31) the signal to noise ratio (SNR) thus determined with a first threshold ratio ($\gamma$); and
- accepts the transmission of information that said first sending terminal (Tki) wants to transmit, when the determined signal to noise ratio (SNR) is at least equal to said first threshold ratio ($\gamma$).

4. The method according to the previous claim, wherein, when at least one other sending terminal (Tki) of said group (Gk), known as the second sending terminal, also wants to simultaneously transmit information to the other terminals (Tki) of said group (Gk), each receiving terminal (Tki), according to said predefined selection strategy implemented during step E3:

- determines (E31) the expected signal to noise ratio (SNR) for a transmission from the second sending terminal;
- compares (E32) the signal to noise ratio (SNR) thus determined with said first threshold ratio ($\gamma$);
- checks (E33) whether at least one further selection criterion is validated;
- and accepts the transmission of information from the first sending terminal (Tki) when the corresponding expected signal to noise ratio (SNR) is at least equal to said first threshold ratio ($\gamma$) and said further selection criterion is validated.

5. The method according to the previous claim, wherein said further selection criterion belongs to the following group of criteria:

- in the case where a priority strategy of the terminals (Tki, Tji) is implemented in said group (Gk), the priority of the first sending terminal (Tki) has a higher priority than the one associated with the second sending terminal (Tki), or even with the other sending terminals (Tki) of said group (Gk) which also want to transmit;
- the determined signal to noise ratio (SNR) corresponding to the first sending terminal (Tki) is greater than the one corresponding to the second sending terminal (Tki), or even to the other sending terminal (Tki) of said group (Gk) which also want to transmit.

**6.** The method according to one of the previous claims 4 and 5, wherein, prior to step E4, each receiving terminal (Tki) of said group (Gk) having accepted the transmission from the first sending terminal:

- determines (E41) the expected signal to interference ratio (SINR) for a transmission from the first sending terminal (Tki) the transmission of information of which is accepted;
- compares (E42) the signal to interference ratio (SINR) thus determined with a second threshold ratio ($\gamma$), preferably equal to said first threshold ratio ($\gamma$); and
- indicates in its return signal:

  ▪ when the determined signal to interference ratio (SINR) is at least equal to said second threshold ratio ($\gamma$), that it authorises the transmission of information simultaneously on the resource allocated to said group (Gk) by a sending terminal (Tki) of said group (Gk) other than said first sending terminal (Tki);
  ▪ when the determined signal to interference ratio (SINR) is lower than said second threshold ratio ($\gamma$), that it refuses the transmission of information simultaneously on the resource allocated to said group (Gk) by a sending terminal (Tki) of said group (Gk) other than said first sending terminal (Tki).

**7.** The method according to one of the previous claims, wherein, during the step of checking E5, said first sending terminal (Tki):

- calculates (E51) a ratio R1 defined by the following relationship:

$$R1 = \frac{N_{OK}}{N_{OK} + N_{KO}}$$

in which:

  ▪ $N_{OK}$ refers to the number of receiving terminals (Tki) of said group (Gk) having accepted the transmission of information from the first sending terminal (Tki); and
  ▪ $N_{KO}$ refers to the number of receiving terminals (Tki) having refused the transmission of information from the first sending terminal (Tki) and having accepted the transmission of information from another sending terminal (Tki) of said group (Gk);

- calculates (E51) a ratio R2 defined by the following relationship:

$$R2 = \frac{N_{OK} + N_{KO}}{N_{Total}^{DMOGroup\#k}}$$

in which $N_{Total}^{DMOGroup\#k}$ refers to the total number of terminals (Tki) of said group (Gk);
- compares the ratios R1 and R2 respectively with a first threshold (S1) and a second threshold (S2); and
- decides that said transmission conditions are met when the ratios R1 and R2 are respectively greater than the first and second thresholds (S1, S2).

**8.** The method according to the previous claim, wherein, a priority strategy of the terminals being defined in said group (Gk), said first sending terminal (Tki):

- checks whether, among the receiving terminals (Tki) having refused to receive information from it, at least one of them has a higher priority than the one of the receiving terminals (Tki) having accepted the transmission from said first sending terminal (Tki); and
- decides that said transmission conditions are met, when the receiving terminals (Tki) having refused to receive information from it do not have a higher priority than the one of the receiving terminals (Tki) having accepted the transmission.

**9.** The method according to one of the previous claims, wherein the transmission request (Tx) comprises the identity of the first sending terminal (Tki), its intention to start a transmission of information and the resources ($\Delta$Fj) allocated to the other groups (Gj) of said network (1) on which the first sending terminal wants to transmit information.

**10.** The method according to one of the previous claims, wherein:

- the first sending terminal (Tki) receives data on the availability of the resources (ΔFj) allocated by default to the other groups (Gj) that it wants to use when transmitting information; and
- during step E6, the first sending terminal (Tki) transmits information on the resource (ΔFk) allocated by default to its group (Gk) and on the wanted resources (ΔFj) of the other groups (Gj) which are available.

**11.** The method according to one of the previous claims, wherein, when said transmission conditions are met, said first sending terminal (Tki), which has decided to transmit information to the other terminals (Tki) of its group (Gk), implements an optimisation strategy corresponding to a power adaptation and/or to an adaptation of the modulation and coding scheme.

**12.** A mobile terminal belonging to a trunked radio network (1), the latter operating in direct mode and comprising a plurality of mobile terminals (Tki, Tji) organised into groups (Gk, Gj), comprising:

- means (M1) for sending a transmission request (Tx) in order to inform the other terminals (Tki) of its group (Gk) of its intention to transmit information thereto;
- means (M2) for monitoring the sending of a transmission request (Tx) from the sending terminals (Tki) of its group (Gk);
- means (M3) for determining, from at least one predefined selection strategy, whether it accepts the transmission of information from a sending terminal (Tki) of its group (Gk) from which it received a transmission request (Tx);
- means (M4) for transmitting a return signal (Rx-A) to the other terminals (Tki) of its group (Gk) comprising data relative to a sending terminal (Tki) from which it accepted a transmission of information;
- means (M5) for checking, in case it receives a return signal from at least one receiving terminal (Tki) of its group (Gk), whether it meets predetermined transmission conditions; and
- means (M6) for transmitting information to the other terminals (Tki) of its group (Gk) on at least one resource (ΔFk) allocated to said group (Gk), in the case where said transmission conditions are met.

**13.** A trunked radio network (1) operating in direct mode and comprising a plurality of mobile terminals (Tki, Tji) organised into groups (Gk, Gj), said mobile terminals (Tki, Tji) being able to implement the method such as specified by claims 1 to 11.

**14.** The trunked radio network operating in direct mode and comprising a plurality of mobile terminals (Tki, Tji) organised into groups (Gk, Gj), said mobile terminals (Tki, Tji) being such as specified by claim 12.

Fig. 1

Fig. 2

Fig. 3

Fig. 4

Fig. 5

Fig. 6

**EP 2 862 407 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009016317 A1, WU XINZHOU